(19) Europäisches Patentamt
European Patent Office
Office européen des brevets

(11) **EP 4 492 306 A1**

(12) **EUROPEAN PATENT APPLICATION**

(43) Date of publication:
**15.01.2025 Bulletin 2025/03**

(21) Application number: **24179584.8**

(22) Date of filing: **03.06.2024**

(51) International Patent Classification (IPC):
**G06Q 10/0631** (2023.01)    **G06Q 10/20** (2023.01)

(52) Cooperative Patent Classification (CPC):
**G06Q 10/20; G06Q 10/0631**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.07.2023 US 202318350671**

(71) Applicant: **The Boeing Company**
**Arlington, VA 22202 (US)**

(72) Inventors:
• **MURPHY, Alice A.**
  **Arlington, 22202 (US)**

• **FOK, Derek S.**
  **Arlington, 22202 (US)**
• **KNAPP, Douglas Peter**
  **Arlington, 22202 (US)**
• **WAAGEN, Alexander**
  **Arlington, 22202 (US)**
• **LU, Tsai-Ching**
  **Arlington, 22202 (US)**

(74) Representative: **Lissandrini, Marco**
**Bugnion S.p.A.**
**Via Pancaldo 68**
**37138 Verona (IT)**

(54) **GENERATING VEHICLE LOGISTIC PLAN AND MAINTENANCE PLAN WITH GRAPHICAL MODEL**

(57)    A computing system including one or more processing devices configured to generate a graphical model of locations, vehicles, and vehicle maintenance resources. The processing devices receive vehicle health signal data and maintenance event data. The processing devices compute a logistic plan based on the graphical model. The logistic plan includes an assignment of the vehicles and resources among the locations. Computing the logistic plan includes determining that the assignment satisfies a vulnerability assessment constraint. Over a plurality of maintenance plan generating iterations, the processing devices compute a maintenance plan for the vehicles that minimizes or maximizes a maintenance plan objective function. Each of the iterations includes computing the maintenance plan based on the vehicle health signal data, the maintenance event data, and the logistic plan, and modifying the logistic plan if performing the maintenance plan would violate the vulnerability assessment constraint. The processing devices output the logistic and maintenance plans.

FIG. 1

**EP 4 492 306 A1**

## Description

FIELD

This disclosure pertains to vehicle maintenance resource allocation and vehicle maintenance scheduling.

BACKGROUND

Aircraft maintenance is often highly logistically complex, since it utilizes many different types of resources that vary between different types of aircraft. When supplying these resources to the locations at which aircraft maintenance is performed, resource shortages and surpluses may occur as a result of inaccurate maintenance resource allocation. Thus, maintenance to an aircraft may be delayed, or additional costs may be incurred by oversupplying a resource to a particular location.

Scheduling aircraft maintenance in time-limited scenarios also presents additional challenges. In such scenarios, the success or failure to achieve a mission objective may depend upon the number of aircraft available. The objectives of an aircraft maintenance schedule may accordingly change during an active mission phase. In addition, the availability of maintenance resources and the ability to perform maintenance on aircraft may be more limited during an active mission phase than at other times.

SUMMARY

According to one aspect of the present disclosure, a computing system is provided, including one or more processing devices configured to generate a graphical model of a plurality of locations, a plurality of vehicles, and a plurality of vehicle maintenance resources. The one or more processing devices are further configured to receive, for each vehicle of the plurality of vehicles, respective vehicle health signal data and maintenance event data. The one or more processing devices are further configured to compute a logistic plan based at least in part on the graphical model. The logistic plan includes an assignment of the vehicles and the vehicle maintenance resources among the plurality of locations. Computing the logistic plan includes determining that the assignment of the vehicle maintenance resources satisfies a vulnerability assessment constraint. Over a plurality of maintenance plan generating iterations, the one or more processing devices are further configured to compute a maintenance plan for the plurality of vehicles that minimizes or maximizes a maintenance plan objective function. Each of the maintenance plan generating iterations includes, based at least in part on the vehicle health signal data, the maintenance event data, and the logistic plan, computing the maintenance plan for the plurality of vehicles. Each of the maintenance plan generating iterations further includes determining whether performing the maintenance plan when the vehicle maintenance resources have the assignment indicated in the logistic plan would violate the vulnerability assessment constraint. Each of the maintenance plan generating iterations further includes, if performing the maintenance plan would violate the vulnerability assessment constraint, modifying the logistic plan. The one or more processing devices are further configured to output the logistic plan and the maintenance plan.

BRIEF DESCRIPTION OF THE DRAWINGS

FIG. 1 schematically shows a computing system at which a logistic plan and the maintenance plan are generated for a plurality of vehicles, according to one example embodiment.

FIG. 2A schematically shows the computing system when the one or more processing devices included in the computing system receive input data and generate a graphical model, according to the example of FIG. 1.

FIG. 2B schematically shows an example graphical model, according to the example of FIG. 2A.

FIG. 2C schematically shows another example graphical model that is structured as a petrinet, according to the example of FIG. 2A.

FIG. 3A schematically shows the computing system when the one or more processing devices are configured to execute a logistic plan generating module to compute the logistic plan, according to the example of FIG. 1.

FIGS. 3B-3C schematically show the computing system when the one or more processing devices are configured to execute a vulnerability assessor during generation of the logistic plan, according to the example of FIG. 3A.

FIG. 4A schematically shows the computing system when the one or more processing devices are configured to compute a maintenance plan for the plurality of vehicles by executing a maintenance plan generating module, according to the example of FIG. 1.

FIG. 4B schematically shows the computing system during training of the trained machine learning model used when generating the maintenance plan, according to the example of FIG. 4A.

FIG. 5 schematically shows the computing system when the one or more processing devices are configured to perform a plurality of maintenance plan generating iterations in which the logistic plan and the maintenance plan are iteratively computed, according to the example of FIG. 1.

FIG. 6A shows a flowchart of a method for use with a computing system to compute a logistic plan and a maintenance plan for sustainment of a plurality of vehicles, according to the example of FIG. 1.

FIG. 6B shows additional steps of the method of FIG. 6A that are performed in some examples when receiving the input data and generating the logistic plan.

FIG. 6C shows additional steps of the method of FIG. 6A that are performed in some examples when computing the logistic plan.

FIG. 6D shows additional steps of the method of FIG. 6A that are performed, according to some examples, in each of a plurality of maintenance plan generating iterations when computing the maintenance plan.

FIG. 7 schematically shows an example computing system in which the computing system of FIG. 1 may be instantiated.

## DETAILED DESCRIPTION

Systems and methods are provided below that allow vehicle maintenance to be scheduled in a manner that depends upon the logistical network in which vehicles and maintenance resources are situated. The systems and methods discussed below are configured to generate a vehicle maintenance plan that approximately minimizes or maximizes a maintenance plan objective function. The maintenance plan is generated using a logistic plan that assigns the vehicle maintenance resources to the locations. In addition, the vehicle maintenance plan is generated to be robust to shocks to the logistical network, such that the maintenance plan satisfies a vulnerability constraint on logistic plan. The logistic plan and the maintenance plan are iteratively updated to satisfy the criteria of both the logistic plan generation and the maintenance plan generation, thereby integrating the computation of resource assignments and vehicle maintenance schedules.

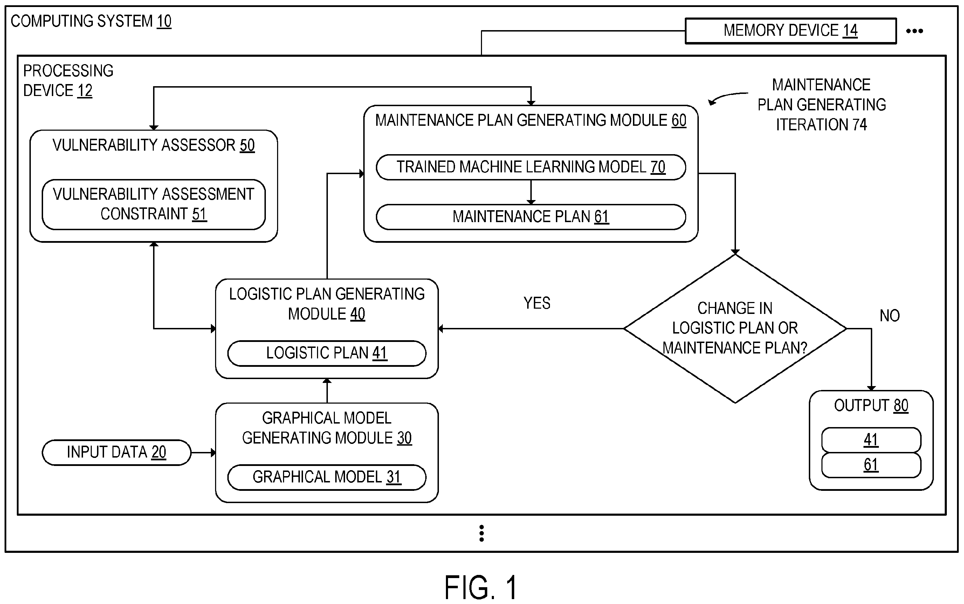

FIG. 1 schematically shows a computing system 10 at which the logistic plan and the maintenance plan are generated, according to one example embodiment. The computing system 10 shown in FIG. 1 includes one or more processing devices 12 and one or more memory devices 14. The one or more processing devices 12 include, for example, one or more central processing units (CPUs), one or more graphics processing units (GPUs), and/or one or more other hardware accelerators. The one or more memory devices 14 include, for example, one or more volatile memory devices and one or more non-volatile storage devices. One or more user input devices and one or more user output devices are also included in the computing system 10 in some examples.

In some examples, the one or more processing devices 12 and the one or more memory devices 14 are included in one or more components that combine processor and memory functionality, such as a system-on-a-chip (SoC). Additionally or alternatively, in some examples, the one or more processing devices 12 and the one or more memory devices 14 are distributed across a plurality of physical computing systems, such as a plurality of networked computing devices located in a data center.

FIG. 1 schematically shows a plurality of modules configured to be executed at the one or more processing devices 12 of the computing system 10. The one or more processing devices 12 are configured to transmit input data 20 to a graphical model generating module 30. A graphical model 31 computed at the graphical model generating module 30 based on the input data 20 is then received as input at a logistic plan generating module 40, which is configured to generate a logistic plan 41. When the logistic plan 41 is generated, the logistic plan generating module 40 communicates with a vulnerability assessor 50 to determine whether one or more vulnerability assessment constraints 51 are violated.

The one or more processing devices 12 are further configured to input the logistic plan 41 into a maintenance plan generating module 60 at which the maintenance plan 61 is generated. The maintenance plan generating module 60, as depicted in the example of FIG. 1, includes a trained machine learning model 70. The one or more processing devices 12 are further configured to execute a loop in which the logistic plan 41 and the maintenance plan 61 are iteratively checked against the one or more vulnerability assessment constraints 51 at the vulnerability assessor 50 and are modified if the one or more vulnerability assessment constraints 51 are violated. Thus, by executing this loop, the one or more processing devices 12 are configured to compute the maintenance plan 61 at the maintenance plan generating module 60 over a plurality of maintenance plan generating iterations 74.

When the loop reaches stable versions of the logistic plan 41 and the maintenance plan 61, the one or more processing devices 12 are further configured to produce an output 80 that includes the logistic plan 41 and the maintenance plan 61. The one or more processing devices 12 are configured to convey the output 80 to one or more additional computing processes. In some examples, the one or more processing devices 12 are configured to output the output 80 to a user interface.

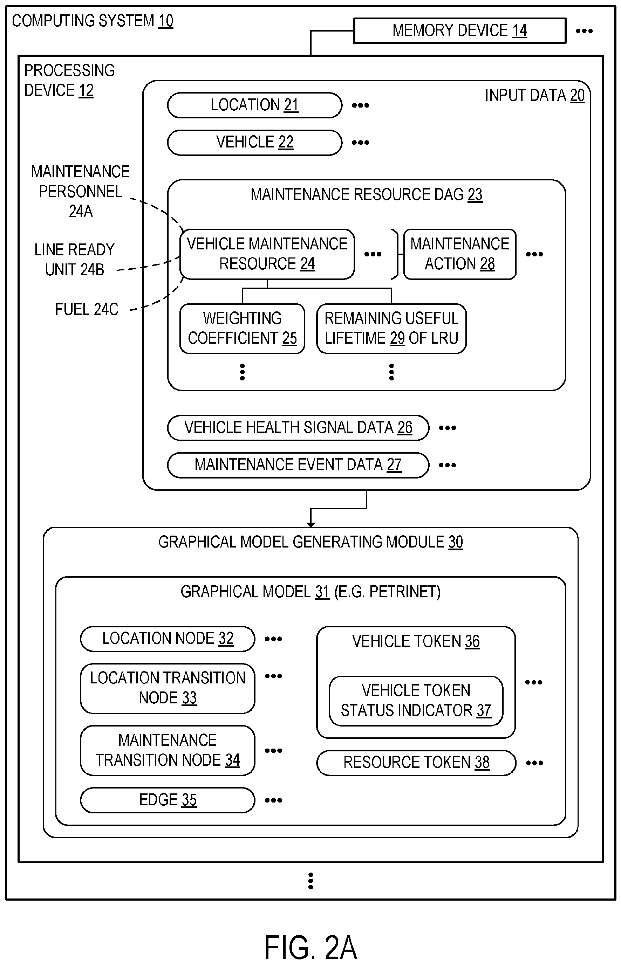

FIG. 2A schematically shows the computing system 10 in additional detail when the one or more processing devices 12 receive the input data 20 and generate the graphical model 31. In the example of FIG. 2A, the input data 20 includes a plurality of locations 21, a plurality of vehicles 22, and a plurality of vehicle maintenance resources 24. In some examples, the vehicles 22 are aircraft, such as a plurality of unmanned aerial vehicles (UAVs) and/or a plurality of aircraft configured to be flown by onboard pilots. The vehicle maintenance resources 24 include maintenance personnel 24A configured to perform maintenance on the vehicles 22. The vehicle maintenance resources 24 shown in the example of FIG. 2A further include line ready units (LRUs) 24B configured to be installed in the vehicles 22. In addition, the vehicle maintenance resources 24 include fuel 24C.

In some examples, as shown in FIG. 2A, the vehicle maintenance resources 24 are encoded in a maintenance resource directed acyclic graph (DAG) 23. The maintenance resource DAG 23 expresses dependencies between one or more types of LRUs 24B and/or one or more types of maintenance personnel 24A included among the vehicle maintenance resources 24. In one example, the maintenance resource DAG 23 indicates types of maintenance that the maintenance personnel 24A are trained to perform. In this example, those types of maintenance are indicated by the types of LRUs 24B used to perform the maintenance, thereby expressing dependencies between the vehicle maintenance personnel 24A and the LRUs 24B. The one or more processing devices 12 are configured to refer to the maintenance resource DAG 23 when determining whether a maintenance action 28 is performable. In some examples, the maintenance resource DAG 23 is expressed as a set of tuples of vehicle maintenance resources 24. Each tuple of vehicle maintenance resources 24 is associated with a respective maintenance action 28 and indicates the vehicle maintenance resources 24 that are used to perform that maintenance action 28.

In the example of FIG. 2A, the graphical model 31 is a petrinet (also known as a place-transition network). The graphical model 31 includes a plurality of nodes, which include a plurality of location nodes 32 that indicate the locations 21. The plurality of nodes further includes a plurality of place transition nodes 33 that indicate respective transitions between the locations 21. In addition, the plurality of nodes further includes a plurality of maintenance transition nodes 34 that indicate a respective plurality of maintenance actions 28 performable at a plurality of vehicles 22. The graphical model 31 further includes a plurality of edges 35 between the nodes.

The graphical model 31 further includes a plurality of tokens, including a plurality of vehicle tokens 36 that represent the vehicles 22 and a plurality of resource tokens 38 that represent the vehicle maintenance resources 24. The vehicle tokens 36 and the vehicle maintenance resources 24 are configured to be moveable between the nodes of the graphical model 31. In the example of FIG. 2A, the vehicle tokens 36 have respective vehicle token status indicators 37 that encode respective maintenance statuses of the vehicles 22. The vehicle token status indicator 37 of a vehicle 22 indicates demand for a maintenance action 28 at the vehicle 22, such as refueling the vehicle 22 or replacing an LRU 24B. In this example, the vehicle token status indicator 37 acts as a vehicle health indicator that specifies whether the components of the vehicle 22 are functional.

As shown in the example of FIG. 2A, the input data 20 further includes vehicle health signal data 26 and maintenance event data 27. The vehicle health signal data 26 includes sensor data collected from respective sensors included in the vehicles and indicates statuses of the components of the vehicles 22. The vehicle health signal data 26 is used to compute the vehicle token status indicators 37 associated with the vehicles 22 in some examples. The maintenance event data 27 indicates prior maintenance actions 28 performed at the vehicle 22. In some examples, the maintenance event data 27 is expressed as time series data in a maintenance event vector. In such examples, the elements of the maintenance event vector indicate time increments of the time series, and the values of those elements indicate types of maintenance actions 28 (including "no maintenance") that occurred at those time increments. The vehicle health signal data 26 and the maintenance event data 27 are used when computing the maintenance plan 61, as discussed in further detail below.

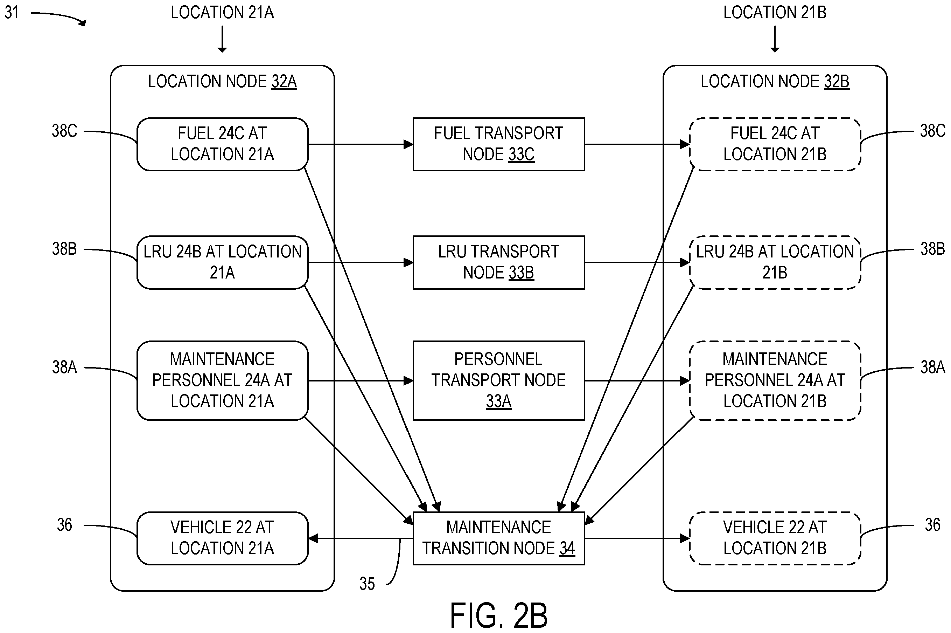

FIG. 2B schematically shows a graphical model 31 according to a simplified example in which the graphical model 31 includes one vehicle 22, two locations 21A and 21B, one type of maintenance personnel 24A, one type of LRU 24B, and one type of fuel 24C. As shown in the example of FIG. 2B, the graphical model 31 includes respective location nodes 32A and 32B corresponding to the locations 21A and 21B. The graphical model 31 further includes a personnel transport node 33A, an LRU transport node 33B, and a fuel transport node 33C. In addition, the graphical model 31 includes a maintenance transition node 34.

The graphical model 31 of FIG. 2B further includes a vehicle token 36, a maintenance personnel token 38A, an LRU token 38B, and a fuel token 38C. These nodes are shown when the vehicle 22, the maintenance personnel 24A, the LRU 24B, and the fuel 24C are located at the first location 21A and when they are located at the second location 21B. FIG. 2B further shows the edges 35 between the nodes.

Returning to the example of FIG. 2A, the one or more processing devices 12 are further configured to receive respective weighting coefficients 25 that are associated with the vehicle maintenance resources 24 and are represented in the maintenance resource DAG 23. The structure of the maintenance resource DAG 23, as well as the locations and vehicle token status indicators 37 of the vehicle tokens 36, is used to dynamically modify the weighting coefficients 25 in some examples. In such examples, the weighting coefficients 25 are each associated with a vehicle maintenance resource 24 and with a location 21. When a vehicle maintenance resource 24 is not usable to perform any maintenance action 28 at its current location 21 or any adjacent locations 21, the one or more processing devices 12 are configured to set the weighting coefficient 25 of that vehicle maintenance resource 24 to zero. The one or more processing devices 12 are further configured to reset the weighting coefficient 25 to its previous value when the vehicle maintenance resource 24 becomes eligible for use in a maintenance action 28 at its current location 21 or an adjacent location 21. In addition, as discussed in further detail below, the one or more processing devices 12 are further configured to generate the logistic plan 41 based at least in part on the weighting coefficients 25.

In the example of FIG. 2A, the input data 20 further includes a respective remaining useful lifetime (RUL) 29 associated with each LRU 24B. In some examples, the RUL 29 of an LRU 24B is used to dynamically update the weighting coefficient 25 of the LRU 24B to decrease the weighting coefficient 25 over time. The RUL 29 is also used in some examples when checking one or more vulnerability assessment constraints 51, as discussed in further detail below.

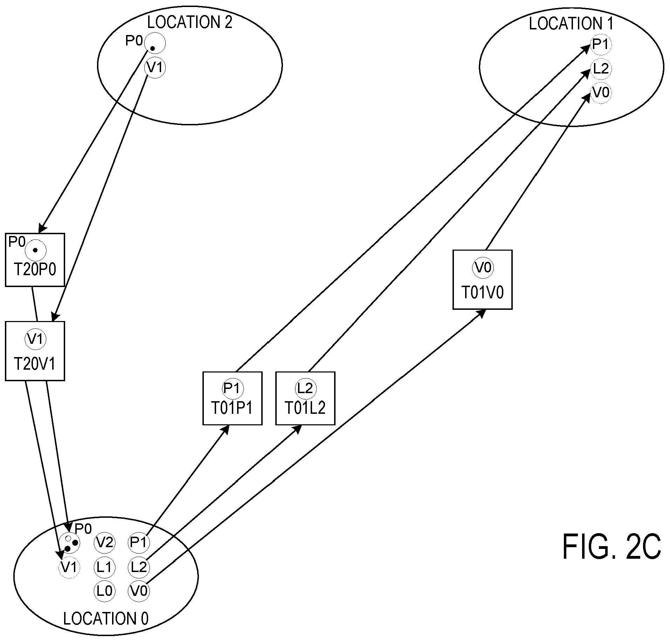

FIG. 2C shows another example graphical model 31 that is structured as a petrinet. The graphical model 31 depicted in the example of FIG. 2C includes three locations, labeled as Location 0, Location 1, and Location 2. Vehicles V0, V1, and V2, personnel P0 and P1, and LRUs L0, L1, and L2 are also shown in the example of FIG. 2. The graphical model 31 further includes transport nodes T01V0, T01P1, T01L2, T20P0, and T20V1, where the "T" at the beginning of the node names indicates "transport," the first digit indicates a source location number, the second digit indicates a destination location number, and the last two characters indicate the vehicle, personnel, or LRU for which that transport node indicates a transition. The dashed lines around V1 at Location 0 and around V0, P1, and L2 at Location 1 indicate that Location 0 is the destination for the vehicle V1, and that Location 2 is the destination for the vehicle V0, the personnel P1, and the LRU L2. The other tokens are not relocated. Three instances of the personnel P0 are included in the graphical model 31, one of which moves from Location 2 to Location 0 and the other of which remain at Location 0, as indicated by dots that represent the personnel tokens.

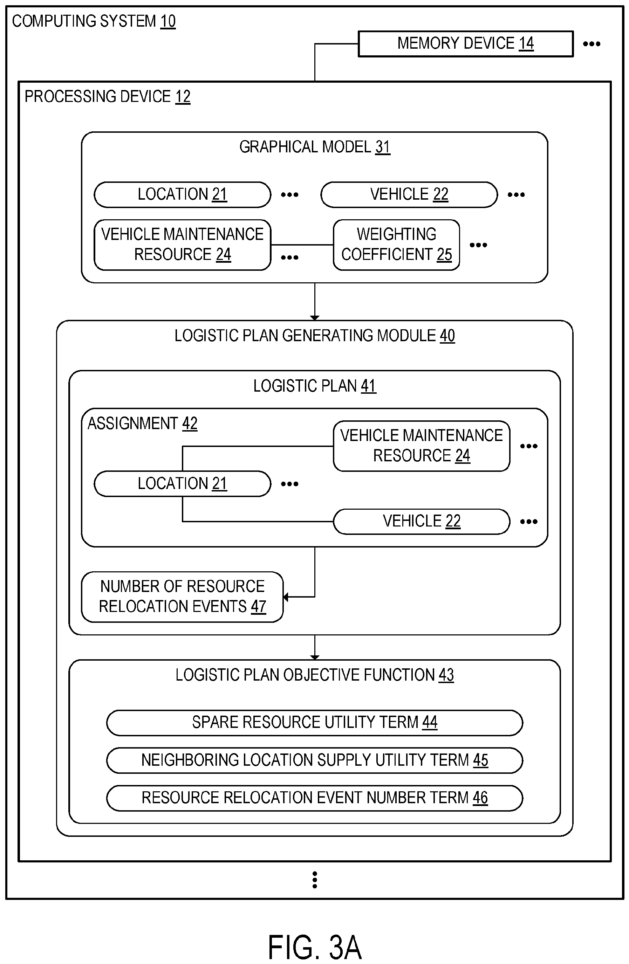

FIG. 3A schematically shows the computing system 10 when the one or more processing devices 12 are configured to execute the logistic plan generating module 40 to compute the logistic plan 41 based at least in part on the graphical model 31. The logistic plan 41, as depicted in FIG. 3A, includes an assignment 42 of the vehicles 22 and the vehicle maintenance resources 24 among the plurality of locations 21.

The one or more processing devices 12 are configured to compute the logistic plan 41 at least in part by minimizing or maximizing a logistic plan objective function 43. The one or more processing devices 12 are configured to compute the logistic plan objective function 43 based at least in part on respective numbers of the plurality of vehicle maintenance resources 24 located at each of the locations 21, the respective weighting coefficients 25 associated with the plurality of vehicle maintenance resources 24, and a total number of resource relocation events 47 specified by the logistic plan 41.

In the example of FIG. 3A, the logistic plan objective function 43 is a utility function that the one or more processing devices 12 are configured to approximately maximize. The logistic plan objective function 43 in the example of FIG. 3A is expressed as a sum of a spare resource utility term 44, a neighboring location supply utility term 45, and a resource relocation event number term 46. Thus, in the example of FIG. 3A, the logistic plan objective function 43 is given by:

$$\mu(P) = c_1 \mathbf{f_i} + c_2 \mathbf{g_j} - c_3 M$$

In the above equation, P is the graphical model 31, $\mathbf{f_i}$ is a spare resource utility value, $\mathbf{g_j}$ is a neighboring location supply utility value. M is the total number of resource relocation events 47 that would be performed when relocating the vehicle maintenance resources 24 into the assignment 42 specified by the logistic plan 41. $c_1$, $c_2$, and $c_3$ are positive constants.

In the above equation for the logistic plan objective function 43, the spare resource utility value $\mathbf{f_i}$ is given by:

$$\mathbf{f_i}\left(\mathbf{n_{i,j}}\right) = \sum_{j=1}^{n} w_{i,j} n_{i,j} e^{1-n_{i,j}}$$

In the above equation, $n_{i,j}$ is the number of vehicle maintenance resources 24 of type $j$ at location $i$. $\mathbf{n_{i,j}}$ is an $m \times n$ matrix of the values of $n_{i,j}$, where m is the number of locations and $n$ is the number of vehicle maintenance resource types, such that $i \in \{1, \dots, m\}$ and $j \in \{1, \dots, n\}$. $w_{i,j}$ are the weighting coefficients 25 associated with respective vehicle maintenance resources 24 and locations 21. In some examples, the weighting coefficients $w_{i,j}$ are monetary values of LRUs 24B. In other examples, the weighting coefficients $w_{i,j}$ represent estimates of the usefulness of the vehicle maintenance resources 24 in a mission. As shown in the above equation for the spare resource utility value $\mathbf{f_i}$, the utility of keeping spare copies of a vehicle maintenance resource 24 declines exponentially at numbers of copies greater than one.

The neighboring location supply utility value $\mathbf{g_j}$ is given by:

$$\mathbf{g_j} = \sum_{v \sim u} \mathbf{f_{i,u}}(\mathbf{n_{i,u}}) - \mathbf{f_{i,u}}(\mathbf{n_{i,u}} - 1) + \mathbf{f_{i,v}}(\mathbf{n_{i,v}} + 1) - \mathbf{f_{i,v}}(\mathbf{n_{i,v}})$$

In the above equation, $\mathbf{f_{i,u}}$ is the sum of the spare resource utility values associated with the plurality of location 21 for a particular vehicle maintenance resource 24. $\mathbf{f_{i,u}}$ is computed as follows:

$$\mathbf{f_{i,u}} = \sum_{i=1}^{m} w_{i,u} n_{i,u} e^{1 - n_{i,u}}$$

In the equation for $\mathbf{g_j}$, $v \sim u$ indicates "v is adjacent to u." Accordingly, when the neighboring location supply utility value $\mathbf{g_j}$ is computed, the one or more processing devices 12 are configured to compute a sum, over all pairs of non-identical vehicle maintenance resources 24, of utility values associated with exchanging the vehicle maintenance resources 24 included in that pair between neighboring locations 21.

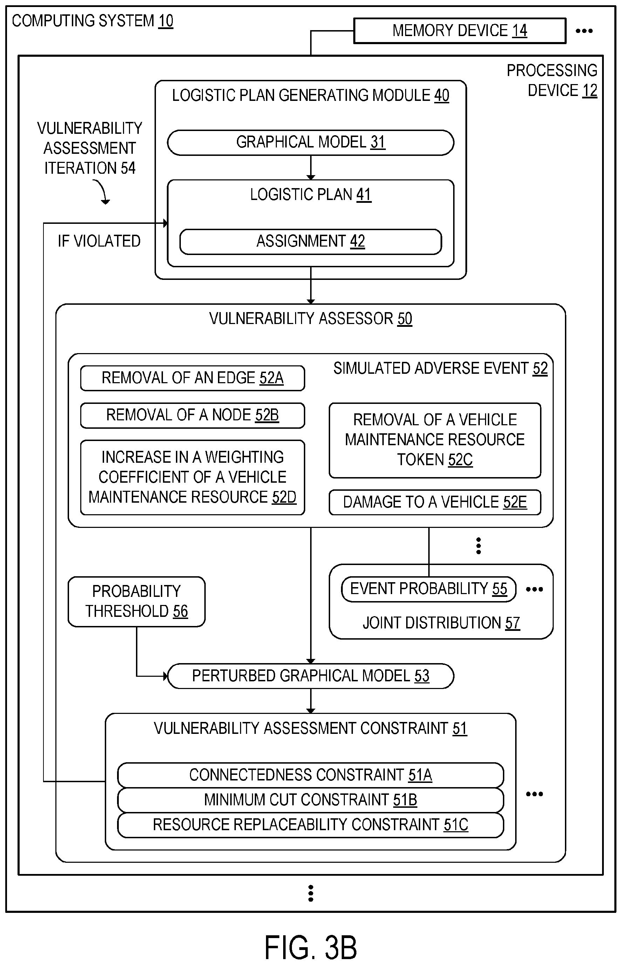

FIG. 3B further shows the computing system 10 during generation of the logistic plan 41 when the one or more processing devices 12 are configured to execute the vulnerability assessor 50. Computing the logistic plan 41 includes determining that the assignment 42 of the vehicle maintenance resources 24 satisfies a vulnerability assessment constraint 51. The one or more processing devices 12 are configured to compute the logistic plan 41 over one or more vulnerability assessment iterations 54 in which a vulnerability assessment constraint 51 is checked and the logistic plan 41 is updated if the vulnerability assessment constraint 51 is violated. In some examples, the one or more processing devices 12 are configured to check multiple different vulnerability assessment constraints 51 either separately or concurrently in the plurality of vulnerability assessment iterations 54.

In each of the vulnerability assessment iterations 54, the one or more processing devices 12 are configured to apply a simulated adverse event 52 to the graphical model 31 to generate a perturbed graphical model 53. Types of simulated adverse events 52 that are applied to the graphical model 31 in some examples include removal of at least one edge from the graphical model 52A, removal of at least one node from the graphical model 52B, removal of at least one vehicle maintenance resource token 52C, an increase in the weighting coefficient of at least one vehicle maintenance resource 52D, or damage to at least one vehicle (expressed as a change in the vehicle token status indicator 37 of a vehicle token 36). Accordingly, by applying the simulated adverse event 52, the one or more processing devices 12 are configured to shock the logistic plan 41 in a manner that corresponds to a shock to a real-world logistical network. Examples of simulated adverse events 52 include inclement weather; vehicle malfunctions or damage; defects in LRUs 24B; increases in vehicle maintenance resource prices; illness or injury of maintenance personnel 24A; and adversarial attacks on locations 21, vehicles 22, and vehicle maintenance resources 24.

In some examples, a plurality of simulated adverse events 52 are applied to the graphical model 31 concurrently when the perturbed graphical model 53 is generated. In such examples, the one or more processing devices 12 are further configured to assign respective event probabilities 55 to the simulated adverse events 52. Using the event probabilities 55, the one or more processing devices 12 are further configured to compute respective probabilities of the simulated adverse events 52 co-occurring. The simulated adverse events 52 that co-occur are treated as statistically independent in some examples. In other examples, the event probabilities 55 are modeled using a joint distribution 57 that represents probabilities of correlated adverse events (e.g., an inclement weather event occurring across multiple locations 21, an adversarial attack on multiple locations 21, or a defect in a batch of LRUs 24B). The joint distribution 57 is encoded in a Bayesian network in some examples. In other examples, rather than utilizing a joint distribution 57, the one or more processing devices 12 are configured to model correlated adverse events as individual events with respective event probabilities 55 that are modeled as being independent of the event probabilities 55 of other simulated adverse events 52.

The one or more processing devices 12 are configured to perform a respective vulnerability assessment iteration 54 for each simulated adverse event 52 or combination of simulated adverse events 52 that has an event probability 55 above a probability threshold 56. In this example, the probability threshold 56 is a user-adjustable parameter of the vulnerability assessor 50. Thus, the user is able to set the strictness of the vulnerability assessment according to characteristics of the mission.

In each of the vulnerability assessment iterations 54, subsequently to applying the one or more simulated adverse events 52 to the graphical model 31 to generate the perturbed graphical model 53, the one or more processing devices 12 are further configured to determining whether the perturbed graphical model 53 violates the vulnerability assessment constraint 51 when the vehicle maintenance resources 24 are assigned as indicated in the logistic plan 41. In some examples, the vulnerability assessment constraint 51 is a connectedness constraint 51A on the graphical model 31. The connectedness constraint 51A is a constraint specifying that the graphical model 31 remains a connected graph if an edge 35 is removed. In other examples, the vulnerability assessment constraint 51 is a minimum cut constraint 51B specifying that the graphical model 31 remains a connected graph if a plurality of edges 35 are removed, up to some predetermined number of edges 35. The predetermined number of edges is expressed as a fraction of the total number of edges 35 included in the graphical model 31 in some examples. In other examples, the vulnerability assessment constraint 51 is a resource replaceability constraint 51C on the assignment 42 of the vehicle maintenance resources 24. In some examples, the resource replaceability constraint 51C specifies that a replacement LRU 24B is available for each LRU 24B with an RUL 29 below a predetermined RUL threshold.

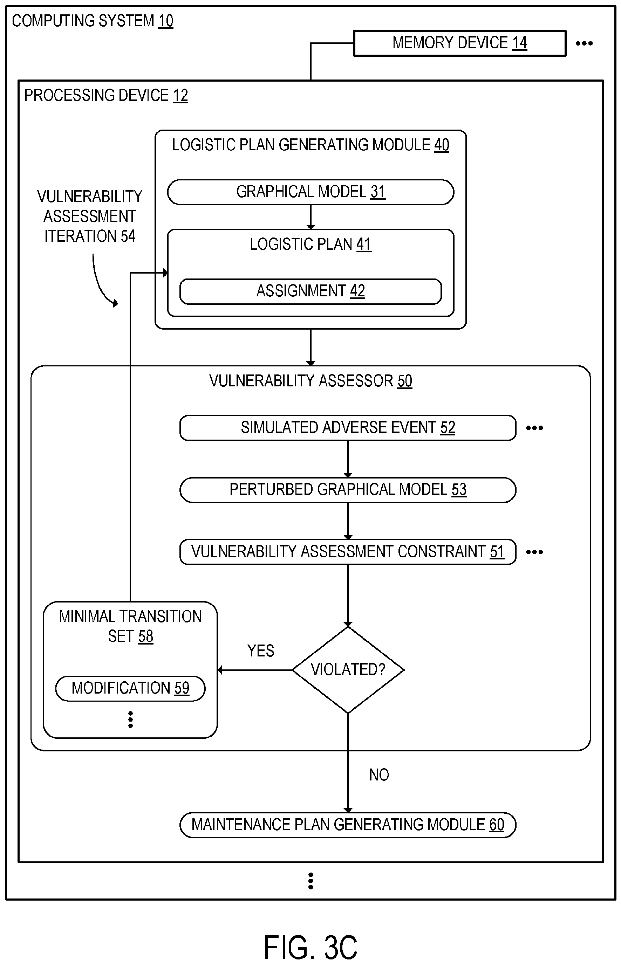

FIG. 3C schematically shows the computing system 10 when additional operations are performed at the one or more processing devices 12 during the vulnerability assessment. As depicted in FIG. 3C, if the perturbed graphical model 53 violates the vulnerability assessment constraint 51, the one or more processing devices 12 are further configured to compute a minimal transition set 58 of one or more modifications 59 to the logistic plan 41 that resolve the violation of the vulnerability assessment constraint 51. The one or more processing devices 12 are further configured to apply the minimal transition set 58 to the logistic plan 41. Each of the modifications 59 included in the minimal transition set 58 is a relocation of a vehicle maintenance resource 24 within the graphical model 31. In examples in which the violation of the vulnerability assessment constraint 51 is satisfied by more than one minimal transition set 58, the minimal transition set 58 that produces to the logistic plan 41 with the highest value of the logistic plan objective function 43 is applied.

Subsequently to updating the graphical model 31 with the minimal transition set 58, the one or more processing devices 12 are further configured to perform another vulnerability assessment iteration 54. The vulnerability assessment iterations 54 are performed until each vulnerability assessment constraint 51 is satisfied. In response to determining that each vulnerability assessment constraint 51 is satisfied, the one or more processing devices 12 are further configured to output the logistic plan 41 to the maintenance plan generating module 60.

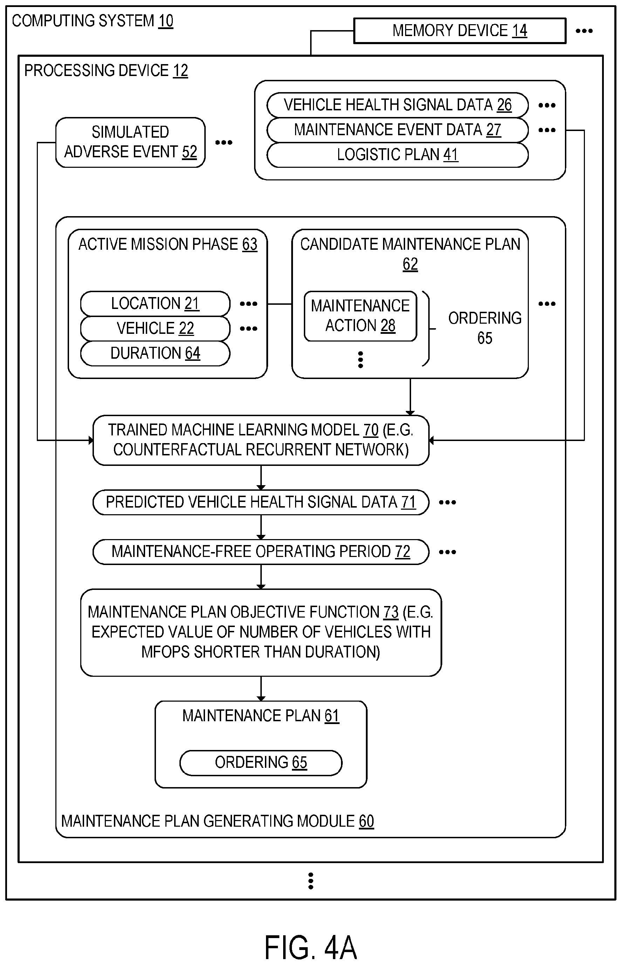

FIG. 4A schematically shows the computing system 10 when the one or more processing devices 12 are configured to execute the maintenance plan generating module 60. The maintenance plan 61 is computed in each of the plurality of maintenance plan generating iterations 74 using a current version of the logistic plan 41. The one or more processing devices 12 are configured to compute the maintenance plan 61 for the plurality of vehicles 22 such that the maintenance plan 61 minimizes or maximizes a maintenance plan objective function 73. In the example of FIG. 4A, the maintenance plan objective function 73 is a loss function that the one or more processing devices 12 are configured to approximately minimize, as discussed in further detail below.

In each of the plurality of maintenance plan generating iterations 74, according to the example of FIG. 4A, the one or more processing devices 12 are configured to generate a plurality of candidate maintenance plans 62 for the plurality of vehicles 22. The plurality of candidate maintenance plans 62 are associated with an active mission phase 63 of a mission that utilizes the plurality of vehicles 22. Parameters of the active mission phase 63, including a duration 64 of the active mission phase 63, one or more locations 21 at which the mission occurs, and the vehicles 22 used in the mission, are configured to be set by the user. In some examples, the candidate maintenance plans 62 include orderings of maintenance actions 28 performable at the vehicles 22 during a maintenance recovery period, which is a period of time outside the active mission phase 63. By testing a plurality of different candidate maintenance plans 62, the one or more processing devices 12 are configured to search across a plurality of different orderings 65 of the maintenance actions 28 for a maintenance plan 61 that has a lowest value of the maintenance plan objective function 73.

For each of the candidate maintenance plans 62, the one or more processing devices 12 are configured to simulate that candidate maintenance plan 62 when each of the simulated adverse events 52 occurs. The candidate maintenance plans 62 are modeled under the adverse conditions at a trained machine learning model 70. At the trained machine learning model 70, the one or more processing devices 12 are configured to determining a number of the vehicles 22 that have respective maintenance-free operating periods (MFOPs) 72 shorter than the duration 64 of the active mission phase 63. An MFOP 72 shorter than the duration 64 of the active mission phase 63 indicates that the vehicle 22 is not expected to remain fully functional over the duration 64 of the active mission phase 63.

In the example of FIG. 4A, the trained machine learning model 70 is a counterfactual recurrent network (CRN). The trained machine learning model 70, in this example, is configured to compute the MFOPs 72 of the vehicles 22 at least in part by compute predicted vehicle health signal data 71 for the vehicles 22 based at least in part on the vehicle health signal data 26 and the maintenance event data 27. The one or more processing devices 12 are further configured to compute the MFOPs 72 of the vehicles 22 from the predicted vehicle health signal data 71.

For each of the candidate maintenance plans 62, the one or more processing devices 12 are further configured to compute, over the plurality of simulated adverse events 52, an expected value of the number of vehicles 22 that have MFOPs 72 shorter than the duration 64. This expected value is the maintenance plan objective function 73 in the example of FIG. 4A. The expective value is computed as a sum of the event probabilities 55 of the simulated adverse events 52 multiplied by the numbers of vehicles with MFOPs 72 shorter than the duration 64, as approximated at the trained machine learning model 70.

The one or more processing devices 12 are further configured to select, as the maintenance plan 61, a candidate maintenance plan 62 of the plurality of candidate maintenance plans 62 that has a lowest expected value of the number of vehicles 22 that have MFOPs 72 shorter than the duration 64. Accordingly, the one or more processing devices 12 are configured to approximately minimize the maintenance plan objective function 73. As shown in the example of FIG. 4A, the maintenance plan 61 includes an ordering 65 of the plurality of maintenance actions 28.

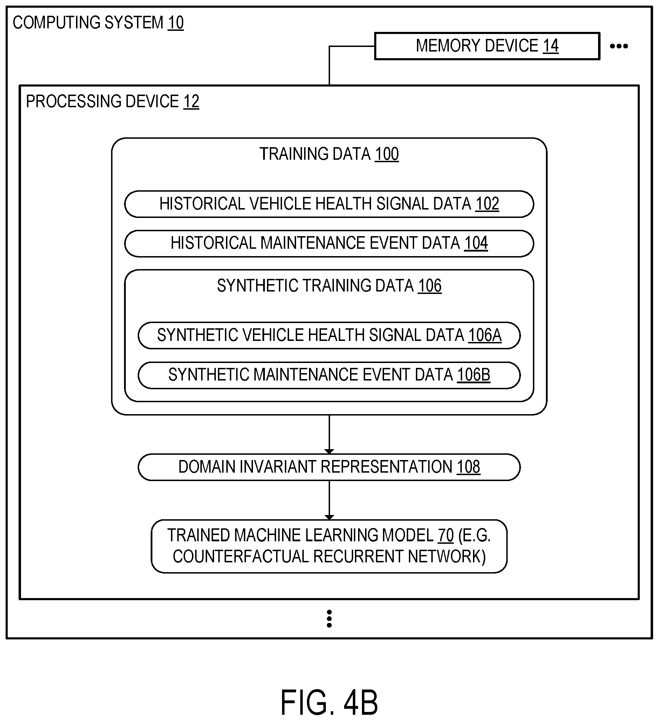

FIG. 4B schematically shows the computing system 10 during training of the trained machine learning model 70. In the example of FIG. 4B, the trained machine learning model 70 is a CRN. The trained machine learning model 70 is trained using training data 100 that includes historical vehicle health signal data 102. The historical vehicle health signal data 102 is encoded as time series data and includes historical sensor data collected at sensors included in a plurality of vehicles. In some examples, the vehicles at which the historical vehicle health signal data 102 is collected are the vehicles 22 modeled in the graphical model 31. In other examples, the historical vehicle health signal data 102 is at least partially collected at one or more other vehicles.

The training data 100 for the trained machine learning model 70 further includes historical maintenance event data 104. The historical maintenance event data 104 indicates historical maintenance actions performed at each of the vehicles from which the historical vehicle health signal data 102 is received.

In some examples, the training data 100 further includes synthetic training data 106. In such examples, the synthetic training data 106 includes synthetic vehicle health signal data 106A and/or synthetic maintenance event data 106B. The synthetic training data 106 is used in such examples to augment the size of the training data set used to generate the trained machine learning model 70.

In some examples, as shown in FIG. 4B, the one or more processing devices 12 are further configured to convert the training data 100 into a domain invariant representation 108 prior to inputting the training data 100 into the machine learning model. The domain invariant representation 108 is a transformation of the training data 100 that accounts for imperfect correlation between the historical vehicle health signal data 102 and the historical maintenance event data 104. For example, domain alignment, meta-learning, data augmentation, ensemble learning, or some other technique can be used to generate the domain invariant representation 108 from the historical vehicle health signal data 102 and the historical maintenance event data 104. The synthetic training data 106 is included in the domain invariant representation 108 in some examples.

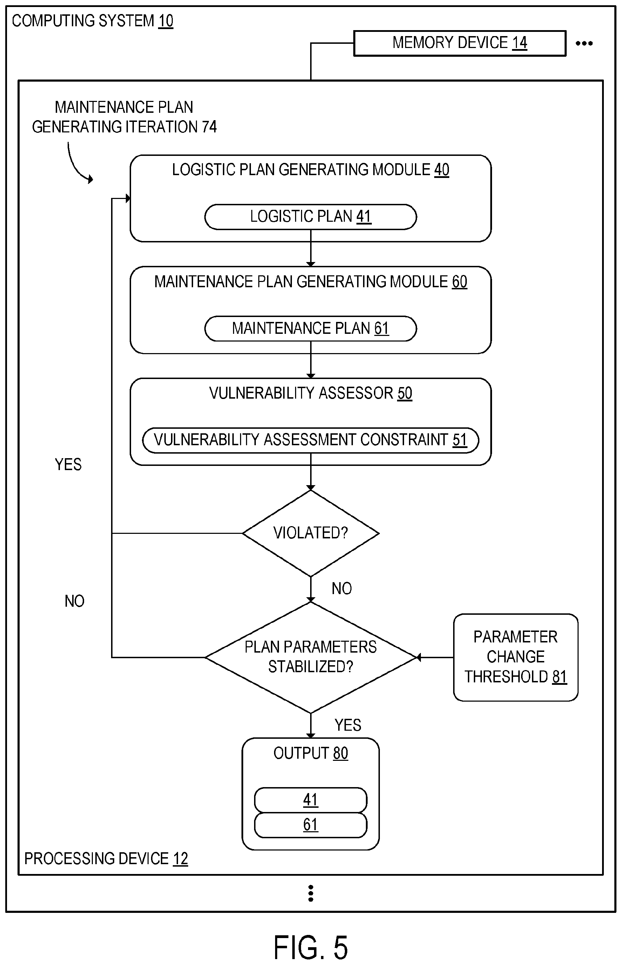

FIG. 5 schematically shows the computing system 10 when the one or more processing devices 12 are configured to perform the plurality of maintenance plan generating iterations 74. As depicted in FIG. 5, subsequently to generating the maintenance plan 61 in a maintenance plan generating iteration 74, the one or more processing devices 12 are further configured to determine whether performing the maintenance plan 61 when the vehicle maintenance resources 24 have the assignment 42 indicated in the logistic plan 41 would violate the one or more vulnerability assessment constraints 51. When the one or more processing devices 12 determine that performing the maintenance plan 61 would violate the one or more vulnerability assessment constraints 51, the one or more processing devices 12 are further configured to modify the logistic plan 41.

Subsequently to modifying the logistic plan 41, the one or more processing devices 12 are further configured to recompute the maintenance plan 61 using the modified logistic plan 41. Thus, the logistic plan 41 and the maintenance plan 61 are iteratively computed over the plurality of maintenance plan generating iterations 74. The one or more processing devices 12 are configured to iteratively compute the logistic plan 41 and the maintenance plan 61 until the parameters of the logistic plan 41 and the maintenance plan 61 stabilize. In some examples, this stabilization occurs when the logistic plan 41 and the maintenance plan 61 remain unchanged, or approximately unchanged to within a parameter threshold 81, between a pair of successive maintenance plan generating iterations 74. In other examples, the one or more processing devices 12 determine that a repetition of logistic plans 41 and maintenance plans 61 has occurred between non-successive maintenance plan generating iterations 74. The one or more processing devices 12, in such examples, are configured to select a logistic plan 41 and a maintenance plan 61 from among the logistic plans 41 and corresponding maintenance plans 61 included in the repeating loop. Thus, a logistic plan 41 and a maintenance plan 61 are still output in examples in which the iterative computation of the logistic plan 41 and the maintenance plan 61 does not converge.

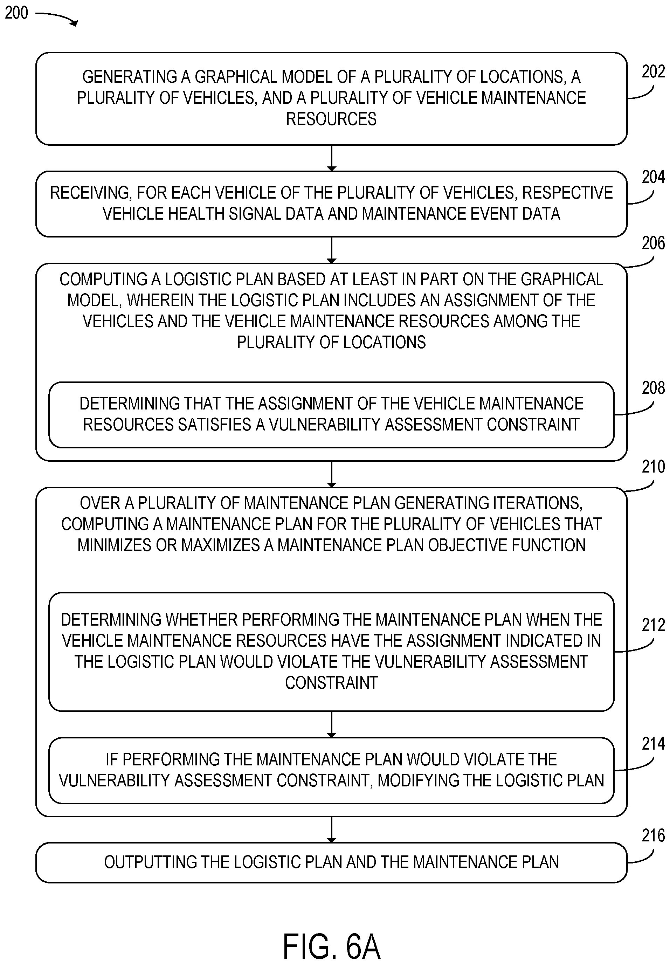

FIG. 6A shows a flowchart of a method 200 for use with a computing system to compute a logistic plan and a maintenance plan for sustainment of a plurality of vehicles. The method 200 is configured to be performed at a computing system that includes one or more processing devices and one or more memory devices.

At step 202, the method 200 includes generating a graphical model of a plurality of locations, a plurality of vehicles, and a plurality of vehicle maintenance resources. The vehicles are aircraft in some examples. The vehicle maintenance resources include, for example, one or more types of maintenance personnel, LRUs, and fuel.

The graphical model includes a plurality of nodes and a plurality of edges between the nodes. In some examples, the plurality of nodes include a plurality of location nodes that indicate the locations. The plurality of nodes further include, in some examples, a plurality of location transition nodes that indicate respective transitions between the locations. The graphical model further includes a plurality of tokens. The plurality of tokens include, in some examples, a plurality of vehicle tokens that represent the vehicles and a plurality of resource tokens that represent the vehicle maintenance resources. The tokens are configured to be moveable between the nodes of the graphical model. In some examples, the graphical model is a petrinet.

At step 204, the method 200 further includes receiving, for each vehicle of the plurality of vehicles, respective vehicle health signal data and maintenance event data. The vehicle health data is collected via sensors included in the plurality of vehicles. The maintenance event data indicates maintenance actions performed at the vehicles. The vehicle health signal data and the maintenance event data are expressed as time series data in some examples.

At step 206, the method 200 further includes computing a logistic plan based at least in part on the graphical model. The logistic plan includes an assignment of the vehicles and the vehicle maintenance resources among the plurality of locations. Computing the logistic plan at step 206 includes, at step 208, determining that the assignment of the vehicle maintenance resources satisfies a vulnerability assessment constraint. Example vulnerability assessment constraints include a connectedness constraint on the graphical model, a minimum cut constraint on the graphical model, or a resource replaceability constraint on the assignment of the vehicle maintenance resources.

At step 210, over a plurality of maintenance plan generating iterations, the method 200 further includes computing a maintenance plan for the plurality of vehicles that minimizes or maximizes a maintenance plan objective function. Step 210 includes, at step 212, determining whether performing the maintenance plan when the vehicle maintenance resources have the assignment indicated in the logistic plan would violate the vulnerability assessment constraint. If performing the maintenance plan would violate the vulnerability assessment constraint, step 210 further includes, at step 214, modifying the logistic plan. The maintenance plan is subsequently computed using the modified logistic plan in a subsequent maintenance plan generating iteration.

At step 214, the method 200 further includes outputting the logistic plan and the maintenance plan. In some examples, the logistic plan and the maintenance plan are output to a user interface.

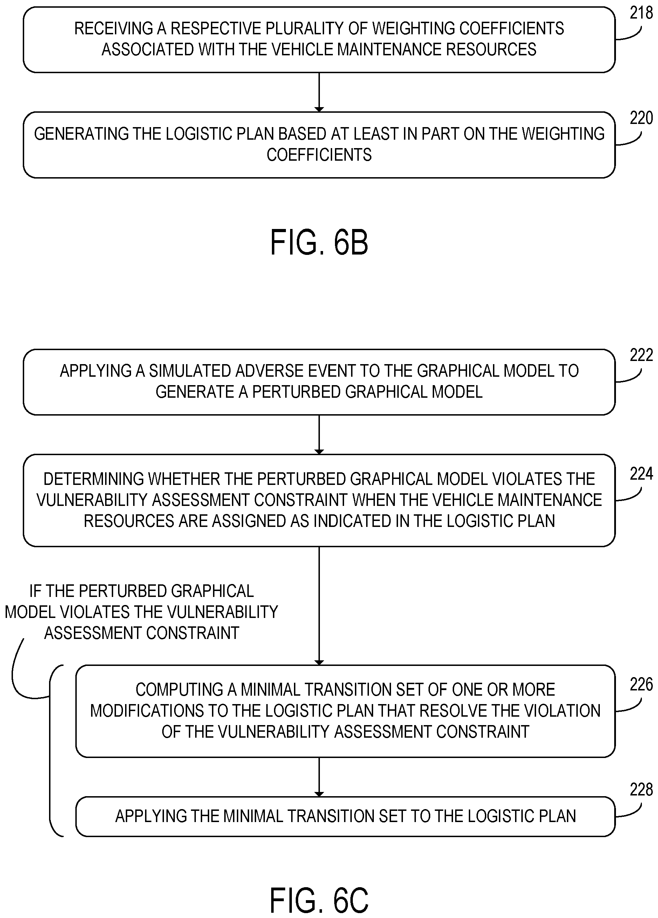

FIGS. 6B-6D show additional steps of the method 200 that are performed in some examples. In the example of FIG. 6B, at step 216, the method 200 further includes receiving a respective plurality of weighting coefficients associated with the vehicle maintenance resources. In some examples, the weighting coefficients indicate prices associated with the vehicle maintenance resources. In other examples, the weighting coefficients indicate usefulness of the vehicle maintenance resources in a mission. The weighting coefficients are dynamically modified in some examples to account for usability of the vehicle maintenance resources at their current locations.

At step 218, the method 200 further includes generating the logistic plan based at least in part on the weighting coefficients. The logistic plan is computed, in some examples, at least in part by minimizing or maximizing a logistic plan objective function. For example, the logistic plan objective function can depend upon respective numbers of the plurality of vehicle maintenance resources located at each of the locations and a total number of resource relocation events specified by the logistic plan as well as on the weighting coefficients. In some examples, the logistic plan objective function includes a spare resource utility term, a neighboring location supply utility term, and a resource relocation event number term.

FIG. 6C shows additional steps of the method 200 that are performed in some examples when computing the logistic plan. The steps of FIG. 6C are performed in each of one or more vulnerability assessment iterations. At step 222, the method 200 further includes applying a simulated adverse event to the graphical model to generate a perturbed graphical model. Examples of simulated adverse events include removal of at least one edge from the graphical model, removal of at least one node from the graphical model, removal of at least one vehicle maintenance resource token, an increase in the weighting coefficient of at least one vehicle maintenance resource, and damage to at least one vehicle. These changes to the graphical model are used, for example, to simulate inclement weather, adversarial attacks, supply shortages, or other types of adverse events.

Combinations of simulated adverse events are also applied during the one or more vulnerability assessment constraints in some examples. In such examples, the simulated adverse events have respective estimated event probabilities. A combination of simulated adverse events is tested when the estimated probability of that combination is above a predefined probability threshold. In some examples, the simulated adverse events are treated as independent. In other examples, a joint probability distribution is computed, and the probabilities of the combinations of simulated adverse events are computed using the joint probability distribution.

At step 224, the method 200 further includes determining whether the perturbed graphical model violates the vulnerability assessment constraint when the vehicle maintenance resources are assigned as indicated in the logistic plan. If the perturbed graphical model violates the vulnerability assessment constraint, steps 226 and 228 are performed. At step 226, the method 200 further includes computing a minimal transition set of one or more modifications to the logistic plan that resolve the violation of the vulnerability assessment constraint. The minimal transition set is a set of vehicle maintenance resource relocations. At step 228, the method 200 further includes applying the minimal transition set to the logistic plan. Thus, the logistic plan is adjusted to satisfy the vulnerability assessment constraint, and this adjustment is performed with a minimal number of resource relocations applied to the logistic plan that minimizes or maximizes the logistic plan objective function.

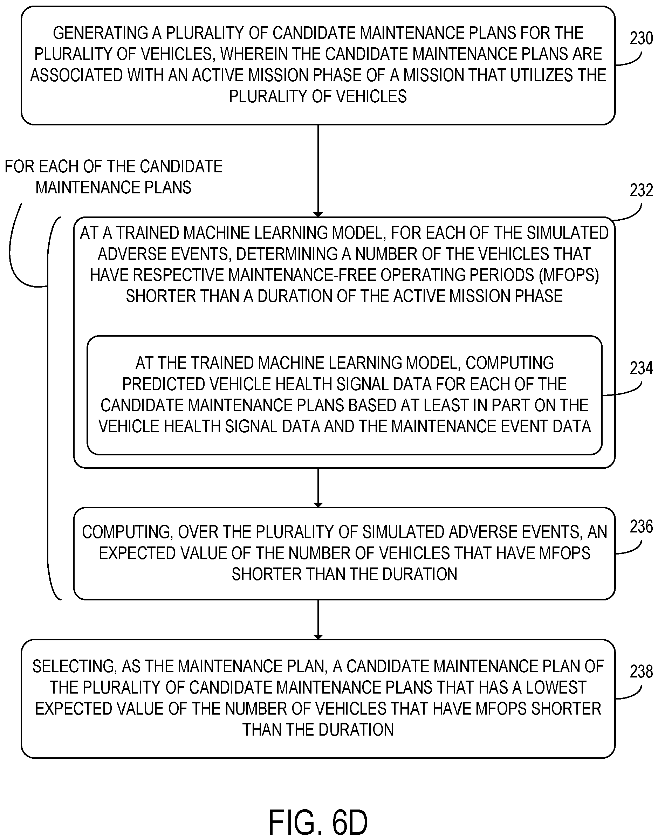

FIG. 6D shows additional steps of the method 200 that are performed in each of the plurality of maintenance plan generating iterations when computing the maintenance plan. At step 230, the method 200 further includes generating a plurality of candidate maintenance plans for the plurality of vehicles. The candidate maintenance plans are associated with an active mission phase of a mission that utilizes the plurality of vehicles. In some examples, the candidate maintenance plan indicates a plurality of maintenance actions performed on the vehicles before and after the active mission phase.

The method 200 further includes steps 232, 234, and 236, which are performed for each of the candidate maintenance plans. At step 232, for each of the simulated adverse events, the method 200 further includes determining a number of the vehicles that have respective MFOPs shorter than a duration of the active mission phase. Step 232 is performed at a trained machine learning model in the example of FIG. 6D. In some examples, the trained machine learning model is a counterfactual recurrent network (CRN).

In the example of FIG. 6D, determining the MFOPs at step 232 includes, at step 234, computing predicted vehicle health signal data for each of the candidate maintenance plans. The predicted vehicle health signal data is computed at the trained machine learning model based at least in part on the vehicle health signal data and the maintenance event data. The MFOPs of the vehicles are then computed from the predicted vehicle health signal data.

At step 236, the method 200 further includes computing, over the plurality of simulated adverse events, an expected value of the number of vehicles that have MFOPs shorter than the duration. Subsequently to computing the respective expected value for each of the candidate maintenance plans, the method 200 further includes selecting, as the maintenance plan, a candidate maintenance plan of the plurality of candidate maintenance plans that has a lowest expected value of the number of vehicles that have MFOPs shorter than the duration. Thus, the expected value of the number of vehicles with MFOPs shorter than the duration of the active mission phase is used as a loss function when selecting the maintenance plan.

Using the systems and methods discussed above, a logistic plan and a maintenance plan for vehicle sustainment are generated in a manner that balances efficient resource usage with robustness to adverse events. The logistic plan and the maintenance plan generated using the above systems and methods allow high numbers of vehicles to remain operable without requiring maintenance during an active mission phase, even when accounting for adverse events that can occur at the logistic network. Thus, the systems and methods discussed above allow vehicle sustainment planning to be performed in a manner that efficiently increases the probability of mission success.

The methods and processes described herein can be tied to a computing system of one or more computing devices. In particular, such methods and processes can be implemented as an executable computer-application program, a network-accessible computing service, an application-programming interface (API), a library, or a combination of the above and/or other compute resources.

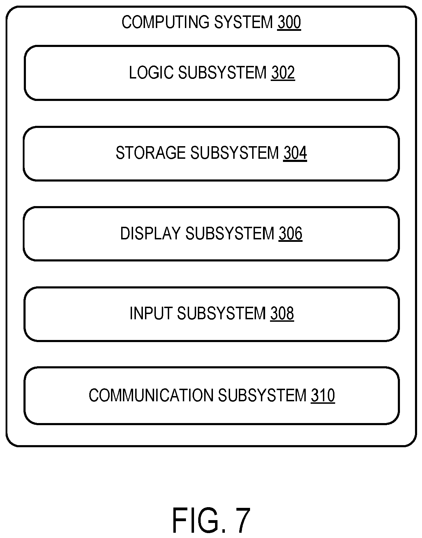

FIG. 7 schematically shows a simplified representation of a computing system 300 configured to provide any to all of the computing functionality described herein. Computing system 300 can take the form of one or more network-accessible devices, server computers, mobile computing devices, Internet of Things (IoT) devices, embedded computing devices, vehicle computing systems, vehicle guidance systems, and/or other computing devices.

Computing system 300 includes a logic subsystem 302 and a storage subsystem 304. Computing system 300 can optionally include a display subsystem 306, input subsystem 308, communication subsystem 310, and/or other subsystems not shown in FIG. 7.

Logic subsystem 302 includes one or more physical devices configured to execute instructions. For example, the logic subsystem can be configured to execute instructions that are part of one or more applications, services, or other logical constructs. The logic subsystem can include one or more hardware processors configured to execute software instructions. Additionally, or alternatively, the logic subsystem can include one or more hardware or firmware devices configured to execute hardware or firmware instructions. Processors of the logic subsystem can be single-core or multi-core, and the instructions executed thereon can be configured for sequential, parallel, and/or distributed processing. Individual components of the logic subsystem optionally can be distributed among two or more separate devices, which can be remotely located and/or configured for coordinated processing. Aspects of the logic subsystem can be virtualized and executed by remotely accessible, networked computing devices configured in a cloud-computing configuration.

Storage subsystem 304 includes one or more physical devices configured to temporarily and/or permanently hold computer information such as data and instructions executable by the logic subsystem. When the storage subsystem includes two or more devices, the devices can be collocated and/or remotely located. Storage subsystem 304 can include volatile, nonvolatile, dynamic, static, read/write, read-only, random-access, sequential-access, location-addressable, file-addressable, and/or content-addressable devices. Storage subsystem 304 can include removable and/or built-in devices. When the logic subsystem executes instructions, the state of storage subsystem 304 can be transformed - e.g., to hold different data.

Aspects of logic subsystem 302 and storage subsystem 304 can be integrated together into one or more hardware-logic components. Such hardware-logic components can include program- and application-specific integrated circuits (PASIC / ASICs), program- and application-specific standard products (PSSP / ASSPs), system-on-a-chip (SOC), and complex programmable logic devices (CPLDs), for example.

The logic subsystem 302 and the storage subsystem 304 can cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine can be instantiated by a single computing device, or a machine can include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality can optionally be saved as one or more unexecuted modules on one or more suitable storage devices.

When included, display subsystem 306 can be used to present a visual representation of data held by storage subsystem 304. This visual representation can take the form of a graphical user interface (GUI). Display subsystem 306 can include one or more display devices utilizing virtually any type of technology. In some implementations, display subsystem can include one or more virtual-, augmented-, or mixed reality displays.

When included, input subsystem 308 can comprise or interface with one or more input devices. An input device can include a sensor device or a user input device. Examples of user input devices include a keyboard, mouse, or touch screen. In some embodiments, the input subsystem can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 310 can be configured to communicatively couple computing system 300 with one or more other computing devices. Communication subsystem 310 can include wired and/or wireless communication devices compatible with one or more different communication protocols. The communication subsystem can be configured for communication via personal-, local- and/or wide-area networks.

Further, the disclosure comprises configurations according to the following clauses.

Clause 1. A computing system comprising: one or more processing devices configured to: generate a graphical model of a plurality of locations, a plurality of vehicles, and a plurality of vehicle maintenance resources; receive, for each vehicle of the plurality of vehicles, respective vehicle health signal data and maintenance event data; compute a logistic plan based at least in part on the graphical model, wherein: the logistic plan includes an assignment of the vehicles and the vehicle maintenance resources among the plurality of locations; and computing the logistic plan includes determining that the assignment of the vehicle maintenance resources satisfies a vulnerability assessment constraint; over a plurality of maintenance plan generating iterations, compute a maintenance plan for the plurality of vehicles that minimizes or maximizes a maintenance plan objective function, wherein each of the maintenance plan generating iterations includes: based at least in part on the vehicle health signal data, the maintenance event data, and the logistic plan, computing the maintenance plan for the plurality of vehicles; determining whether performing the maintenance plan when the vehicle maintenance resources have the assignment indicated in the logistic plan would violate the vulnerability assessment constraint; and if performing the maintenance plan would violate the vulnerability assessment constraint, modifying the logistic plan; and output the logistic plan and the maintenance plan.

Clause 2. The computing system of Clause 1, wherein the graphical model includes: a plurality of nodes including a plurality of location nodes that indicate the locations; a plurality of edges between the nodes; and a plurality of tokens including a plurality of vehicle tokens that represent the vehicles and a plurality of resource tokens that represent the vehicle maintenance resources.

Clause 3. The computing system of Clause 2, wherein the graphical model is a petrinet.

Clause 4. The computing system of Clause 2, wherein the vulnerability assessment constraint is: a connectedness constraint on the graphical model; a minimum cut constraint on the graphical model; or a resource replaceability constraint on the assignment of the vehicle maintenance resources.

Clause 5. The computing system of Clause 2, wherein the one or more processing devices are configured to compute the logistic plan at least in part by, in each of one or more vulnerability assessment iterations: applying a simulated adverse event to the graphical model to generate a perturbed graphical model; determining whether the perturbed graphical model violates the vulnerability assessment constraint when the vehicle maintenance resources are assigned as indicated in the logistic plan; and if the perturbed graphical model violates the vulnerability assessment constraint: computing a minimal transition set of one or more modifications to the logistic plan that resolve the violation of the vulnerability assessment constraint; and applying the minimal transition set to the logistic plan.

Clause 6. The computing system of Clause 5, wherein the one or more processing devices are further configured to: receive a respective plurality of weighting coefficients associated with the vehicle maintenance resources; and generate the logistic plan based at least in part on the weighting coefficients.

Clause 7. The computing system of Clause 6, wherein the simulated adverse event includes: removal of at least one edge from the graphical model; removal of at least one node from the graphical model; removal of at least one vehicle maintenance resource token; an increase in the weighting coefficient of at least one vehicle maintenance resource; or damage to at least one vehicle.

Clause 8. The computing system of Clause 6, wherein the one or more processing devices are further configured to compute the logistic plan at least in part by minimizing or maximizing a logistic plan objective function.

Clause 9. The computing system of Clause 8, wherein the one or more processing devices are configured to compute the logistic plan objective function based at least in part on: respective numbers of the plurality of vehicle maintenance resources located at each of the locations; the respective weighting coefficients associated with the plurality of vehicle maintenance resources; and a total number of resource relocation events specified by the logistic plan.

Clause 10. The computing system of Clause 5, wherein the one or more processing devices are configured to compute the maintenance plan at least in part by, in each of the plurality of maintenance plan generating iterations: generating a plurality of candidate maintenance plans for the plurality of vehicles, wherein the candidate maintenance plans are associated with an active mission phase of a mission that utilizes the plurality of vehicles; and for each of the candidate maintenance plans: at a trained machine learning model, for each of the simulated adverse events, determining a number of the vehicles that have respective maintenance-free operating periods (MFOPs) shorter than a duration of the active mission phase; and computing, over the plurality of simulated adverse events, an expected value of the number of vehicles that have MFOPs shorter than the duration; and selecting, as the maintenance plan, a candidate maintenance plan of the plurality of candidate maintenance plans that has a lowest expected value of the number of vehicles that have MFOPs shorter than the duration.

Clause 11. The computing system of Clause 10, wherein the trained machine learning model is a counterfactual recurrent network (CRN) at which, for each of the candidate maintenance plans, the one or more processing devices are configured to compute predicted vehicle health signal data based at least in part on the vehicle health signal data and the maintenance event data.

Clause 12. The computing system of Clause 1, wherein the maintenance plan includes an ordering of a plurality of maintenance actions scheduled for performance at each vehicle of the plurality of vehicles.

Clause 13. The computing system of Clause 1, wherein the graphical model indicates one or more types of line ready units (LRUs) and one or more types of maintenance personnel included among the plurality of vehicle maintenance resources.

Clause 14. A method for use with a computing system, the method comprising: generating a graphical model of a plurality of locations, a plurality of vehicles, and a plurality of vehicle maintenance resources; receiving, for each vehicle of the plurality of vehicles, respective vehicle health signal data and maintenance event data; computing a logistic plan based at least in part on the graphical model, wherein: the logistic plan includes an assignment of the vehicles and the vehicle maintenance resources among the plurality of locations; and computing the logistic plan includes determining that the assignment of the vehicle maintenance resources satisfies a vulnerability assessment constraint; over a plurality of maintenance plan generating iterations, computing a maintenance plan for the plurality of vehicles that minimizes or maximizes a maintenance plan objective function, wherein each of the maintenance plan generating iterations includes: based at least in part on the vehicle health signal data, the maintenance event data, and the logistic plan, computing the maintenance plan for the plurality of vehicles; determining whether performing the maintenance plan when the vehicle maintenance resources have the assignment indicated in the logistic plan would violate the vulnerability assessment constraint; and if performing the maintenance plan would violate the vulnerability assessment constraint, modifying the logistic plan; and outputting the logistic plan and the maintenance plan.

Clause 15. The method of Clause 14, wherein the graphical model includes: a plurality of nodes including a plurality of location nodes that indicate the locations; a plurality of edges between the nodes; and a plurality of tokens including a plurality of vehicle tokens that represent the vehicles and a plurality of resource tokens that represent the vehicle maintenance resources.

Clause 16. The method of Clause 15, wherein the graphical model is a petrinet.

Clause 17. The method of Clause 14, wherein computing the logistic plan includes, in each of one or more vulnerability assessment iterations: applying a simulated adverse event to the graphical model to generate a perturbed graphical model; determining whether the perturbed graphical model violates the vulnerability assessment constraint when the vehicle maintenance resources are assigned as indicated in the logistic plan; and if the perturbed graphical model violates the vulnerability assessment constraint: computing a minimal transition set of one or more modifications to the logistic plan that resolve the violation of the vulnerability assessment constraint; and applying the minimal transition set to the logistic plan.

Clause 18. The method of Clause 17, wherein computing the maintenance plan includes, in each of the plurality of maintenance plan generating iterations: generating a plurality of candidate maintenance plans for the plurality of vehicles, wherein the candidate maintenance plans are associated with an active mission phase of a mission that utilizes the plurality of vehicles; and for each of the candidate maintenance plans: at a trained machine learning model, for each of the simulated adverse events, determining a number of the vehicles that have respective maintenance-free operating periods (MFOPs) shorter than a duration of the active mission phase; and computing, over the plurality of simulated adverse events, an expected value of the number of vehicles that have MFOPs shorter than the duration; and selecting, as the maintenance plan, a candidate maintenance plan of the plurality of candidate maintenance plans that has a lowest expected value of the number of vehicles that have MFOPs shorter than the duration.

Clause 19. The method of claim 18, wherein: the trained machine learning model is a counterfactual recurrent network (CRN); and the method further comprises, at the CRN, computing predicted vehicle health signal data for each of the candidate maintenance plans based at least in part on the vehicle health signal data and the maintenance event data.

Clause 20. A computing system comprising: one or more processing devices configured to: generate a petrinet that includes: a plurality of nodes including: a plurality of location nodes that indicate a respective plurality of locations; a plurality of location transition nodes that indicate respective transitions between the locations; and a plurality of maintenance transition nodes that indicate a respective plurality of maintenance actions performable at a plurality of vehicles; a plurality of edges between the nodes; and a plurality of tokens including: a plurality of vehicle tokens that represent the vehicles; and a plurality of resource tokens that represent vehicle maintenance resources with which the vehicle maintenance actions are performable; receive, for each vehicle of the plurality of vehicles, respective vehicle health signal data and maintenance event data; compute a logistic plan based at least in part on the graphical model, wherein: the logistic plan includes an assignment of the vehicles and the vehicle maintenance resources among the plurality of locations; and computing the logistic plan includes determining that the assignment of the vehicle maintenance resources satisfies a vulnerability assessment constraint; over a plurality of maintenance plan generating iterations, compute a maintenance plan for the plurality of vehicles that minimizes or maximizes a maintenance plan objective function, wherein each of the maintenance plan generating iterations includes: based at least in part on the vehicle health signal data, the maintenance event data, and the logistic plan, computing the maintenance plan for the plurality of vehicles; determining whether performing the maintenance plan when the vehicle maintenance resources have the assignment indicated in the logistic plan would violate the vulnerability assessment constraint; and if performing the maintenance plan would violate the vulnerability assessment constraint, modifying the logistic plan; and output the logistic plan and the maintenance plan.

"And/or" as used herein is defined as the inclusive or $\lor$, as specified by the following truth table:

| A | B | A $\lor$ B |
|---|---|---|
| True | True | True |
| True | False | True |
| False | True | True |
| False | False | False |

It will be understood by those of ordinary skill in the art without undue experimentation that the configurations and/or approaches described herein are exemplary in nature, and that these specific implementations or examples are not to be considered in a limiting sense, because numerous variations are possible. The specific routines or methods described herein can represent one or more of any number of processing strategies. As such, various acts illustrated and/or described can be performed in the sequence illustrated and/or described, in other sequences, in parallel, or omitted. Likewise, the order of the above-described processes can be changed.

## Claims

1. A method (200) for use with a computing system, the method comprising:

   generating a graphical model of a plurality of locations, a plurality of vehicles, and a plurality of vehicle maintenance resources (202);
   receiving, for each vehicle of the plurality of vehicles, respective vehicle health signal data and maintenance event data (204);
   computing a logistic plan based at least in part on the graphical model, wherein:

   the logistic plan includes an assignment of the vehicles and the vehicle maintenance resources among the plurality of locations (206); and
   computing the logistic plan includes determining that the assignment of the vehicle maintenance resources satisfies a vulnerability assessment constraint (208);

   over a plurality of maintenance plan generating iterations, computing a maintenance plan for the plurality of vehicles that minimizes or maximizes a maintenance plan objective function (210), wherein each of the maintenance plan generating iterations includes:

   based at least in part on the vehicle health signal data, the maintenance event data, and the logistic plan,

**EP 4 492 306 A1**

computing the maintenance plan for the plurality of vehicles;
determining whether performing the maintenance plan when the vehicle maintenance resources have the assignment indicated in the logistic plan would violate the vulnerability assessment constraint (212); and
if performing the maintenance plan would violate the vulnerability assessment constraint, modifying the logistic plan (214); and

outputting the logistic plan and the maintenance plan (216).

2.  The method of claim 1, wherein the graphical model includes:

    a plurality of nodes including a plurality of location nodes that indicate the locations;
    a plurality of edges between the nodes; and
    a plurality of tokens including a plurality of vehicle tokens that represent the vehicles and a plurality of resource tokens that represent the vehicle maintenance resources.

3.  The method of claim 15, wherein the graphical model is a petrinet.

4.  The method of claim 2, wherein the vulnerability assessment constraint is:

    a connectedness constraint (51A) on the graphical model;
    a minimum cut constraint (51B) on the graphical model; or
    a resource replaceability constraint (51C) on the assignment of the vehicle maintenance resources.

5.  The method of claim 1, wherein computing the logistic plan includes, in each of one or more vulnerability assessment iterations:

    applying a simulated adverse event to the graphical model to generate a perturbed graphical model (222);
    determining whether the perturbed graphical model violates the vulnerability assessment constraint when the vehicle maintenance resources are assigned as indicated in the logistic plan (224); and
    if the perturbed graphical model violates the vulnerability assessment constraint:

        computing a minimal transition set of one or more modifications to the logistic plan that resolve the violation of the vulnerability assessment constraint (226); and
        applying the minimal transition set to the logistic plan (228).

6.  The method of claim 5, wherein it further comprises:

    receiving a respective plurality of weighting coefficients (25) associated with the vehicle maintenance resources; and
    generating the logistic plan based at least in part on the weighting coefficients.

7.  The method of claim 6, wherein the simulated adverse event includes:

    removal of at least one edge (52A) from the graphical model;
    removal of at least one node (52B) from the graphical model;
    removal of at least one vehicle maintenance resource token (52C);
    an increase in the weighting coefficient of at least one vehicle maintenance resource (52D); or
    damage to at least one vehicle (52E).

8.  The method of claim 6, wherein it further comprises computing the logistic plan at least in part by minimizing or maximizing a logistic plan objective function (43).

9.  The method of claim 8, wherein it further comprises computing the logistic plan objective function based at least in part on:

    respective numbers of the plurality of vehicle maintenance resources located at each of the locations;
    the respective weighting coefficients associated with the plurality of vehicle maintenance resources; and
    a total number of resource relocation events (47) specified by the logistic plan.

10. The method of claim 5, wherein computing the maintenance plan includes, in each of the plurality of maintenance plan generating iterations:

generating a plurality of candidate maintenance plans for the plurality of vehicles, wherein the candidate maintenance plans are associated with an active mission phase of a mission that utilizes the plurality of vehicles (230); and
for each of the candidate maintenance plans:

at a trained machine learning model, for each of the simulated adverse events, determining a number of the vehicles that have respective maintenance-free operating periods (MFOPs) shorter than a duration of the active mission phase (232); and
computing, over the plurality of simulated adverse events, an expected value of the number of vehicles that have MFOPs shorter than the duration (236); and

selecting, as the maintenance plan, a candidate maintenance plan of the plurality of candidate maintenance plans that has a lowest expected value of the number of vehicles that have MFOPs shorter than the duration (238).

11. The method of claim 10, wherein:

the trained machine learning model is a counterfactual recurrent network (CRN); and
the method further comprises, at the CRN, computing predicted vehicle health signal data for each of the candidate maintenance plans based at least in part on the vehicle health signal data and the maintenance event data (234).

12. The method of claim 1, wherein the maintenance plan includes an ordering of a plurality of maintenance actions scheduled for performance at each vehicle of the plurality of vehicles.

13. The method of claim 1, wherein the graphical model indicates one or more types of line ready units (LRUs) (24B) and one or more types of maintenance personnel (24A) included among the plurality of vehicle maintenance resources.

14. A computing system (10) comprising:
one or more processing devices (12) configured to carry out a method according to any one of claims 1 to 13.

15. The computing system (10) of claim 14, wherein it further comprises one or more memory devices (14), and further wherein, alternatively:

the one or more processing devices (12) and the one or more memory devices (14) are included in a system-on-a-chip (SoC); or
the one or more processing devices (12) and the one or more memory devices (14) are distributed across a plurality of networked computing devices located in a data center.

FIG. 1

COMPUTING SYSTEM 10

MEMORY DEVICE 14 •••

PROCESSING DEVICE 12

INPUT DATA 20

LOCATION 21 •••

VEHICLE 22 •••

MAINTENANCE PERSONNEL 24A

LINE READY UNIT 24B

FUEL 24C

MAINTENANCE RESOURCE DAG 23

VEHICLE MAINTENANCE RESOURCE 24 ••• } MAINTENANCE ACTION 28 •••

WEIGHTING COEFFICIENT 25

REMAINING USEFUL LIFETIME 29 OF LRU

⋮ ⋮

VEHICLE HEALTH SIGNAL DATA 26 •••

MAINTENANCE EVENT DATA 27 •••

GRAPHICAL MODEL GENERATING MODULE 30

GRAPHICAL MODEL 31 (E.G. PETRINET)

LOCATION NODE 32 •••

LOCATION TRANSITION NODE 33 •••

MAINTENANCE TRANSITION NODE 34 •••

EDGE 35 •••

VEHICLE TOKEN 36

VEHICLE TOKEN STATUS INDICATOR 37 •••

RESOURCE TOKEN 38 •••

⋮

FIG. 2A

17

**FIG. 2B**

EP 4 492 306 A1

LOCATION 2

P0

V1

LOCATION 1

P1

L2

V0

P0

T20P0

V1

T20V1

V0

T01V0

P1

T01P1

L2

T01L2

P0

V2  P1

V1  L1  L2

L0  V0

LOCATION 0

FIG. 2C

COMPUTING SYSTEM 10

MEMORY DEVICE 14 •••

PROCESSING DEVICE 12

GRAPHICAL MODEL 31

LOCATION 21 •••    VEHICLE 22 •••

VEHICLE MAINTENANCE RESOURCE 24 •••    WEIGHTING COEFFICIENT 25 •••

LOGISTIC PLAN GENERATING MODULE 40

LOGISTIC PLAN 41

ASSIGNMENT 42

VEHICLE MAINTENANCE RESOURCE 24 •••

LOCATION 21 •••

VEHICLE 22 •••

NUMBER OF RESOURCE RELOCATION EVENTS 47

LOGISTIC PLAN OBJECTIVE FUNCTION 43

SPARE RESOURCE UTILITY TERM 44

NEIGHBORING LOCATION SUPPLY UTILITY TERM 45

RESOURCE RELOCATION EVENT NUMBER TERM 46

⋮

FIG. 3A

COMPUTING SYSTEM 10

MEMORY DEVICE 14 •••

PROCESSING DEVICE 12

LOGISTIC PLAN GENERATING MODULE 40

GRAPHICAL MODEL 31

LOGISTIC PLAN 41

ASSIGNMENT 42

VULNERABILITY ASSESSMENT ITERATION 54

IF VIOLATED

VULNERABILITY ASSESSOR 50

SIMULATED ADVERSE EVENT 52

REMOVAL OF AN EDGE 52A

REMOVAL OF A NODE 52B

INCREASE IN A WEIGHTING COEFFICIENT OF A VEHICLE MAINTENANCE RESOURCE 52D

REMOVAL OF A VEHICLE MAINTENANCE RESOURCE TOKEN 52C

DAMAGE TO A VEHICLE 52E

PROBABILITY THRESHOLD 56

EVENT PROBABILITY 55 •••

JOINT DISTRIBUTION 57

PERTURBED GRAPHICAL MODEL 53

VULNERABILITY ASSESSMENT CONSTRAINT 51

CONNECTEDNESS CONSTRAINT 51A

MINIMUM CUT CONSTRAINT 51B

RESOURCE REPLACEABILITY CONSTRAINT 51C

•••

⋮

FIG. 3B

COMPUTING SYSTEM 10

MEMORY DEVICE 14   •••

PROCESSING DEVICE 12

LOGISTIC PLAN GENERATING MODULE 40

GRAPHICAL MODEL 31

VULNERABILITY
ASSESSMENT
ITERATION 54

LOGISTIC PLAN 41

ASSIGNMENT 42

VULNERABILITY ASSESSOR 50

SIMULATED ADVERSE EVENT 52   •••

PERTURBED GRAPHICAL MODEL 53

VULNERABILITY ASSESSMENT CONSTRAINT 51   •••

MINIMAL TRANSITION
SET 58

MODIFICATION 59

⋮

YES

VIOLATED?

NO

MAINTENANCE PLAN GENERATING MODULE 60

⋮

FIG. 3C

COMPUTING SYSTEM 10

MEMORY DEVICE 14 •••

PROCESSING DEVICE 12

VEHICLE HEALTH SIGNAL DATA 26 •••
MAINTENANCE EVENT DATA 27 •••
LOGISTIC PLAN 41

SIMULATED ADVERSE EVENT 52 •••

ACTIVE MISSION PHASE 63

LOCATION 21 •••
VEHICLE 22 •••
DURATION 64

CANDIDATE MAINTENANCE PLAN 62

MAINTENANCE ACTION 28
⋮

ORDERING 65

•••

TRAINED MACHINE LEARNING MODEL 70 (E.G. COUNTERFACTUAL RECURRENT NETWORK)

PREDICTED VEHICLE HEALTH SIGNAL DATA 71 •••

MAINTENANCE-FREE OPERATING PERIOD 72 •••

MAINTENANCE PLAN OBJECTIVE FUNCTION 73 (E.G. EXPECTED VALUE OF NUMBER OF VEHICLES WITH MFOPS SHORTER THAN DURATION)

MAINTENANCE PLAN 61

ORDERING 65

MAINTENANCE PLAN GENERATING MODULE 60

⋮

FIG. 4A

COMPUTING SYSTEM 10

MEMORY DEVICE 14 • • •

PROCESSING DEVICE 12

TRAINING DATA 100

HISTORICAL VEHICLE HEALTH SIGNAL DATA 102

HISTORICAL MAINTENANCE EVENT DATA 104

SYNTHETIC TRAINING DATA 106

SYNTHETIC VEHICLE HEALTH SIGNAL DATA 106A

SYNTHETIC MAINTENANCE EVENT DATA 106B

DOMAIN INVARIANT REPRESENTATION 108

TRAINED MACHINE LEARNING MODEL 70 (E.G. COUNTERFACTUAL RECURRENT NETWORK)

⋮

FIG. 4B

COMPUTING SYSTEM 10

MEMORY DEVICE 14 ⋯

MAINTENANCE PLAN
GENERATING ITERATION 74

LOGISTIC PLAN GENERATING MODULE 40

LOGISTIC PLAN 41

MAINTENANCE PLAN GENERATING MODULE 60

MAINTENANCE PLAN 61

VULNERABILITY ASSESSOR 50

VULNERABILITY ASSESSMENT CONSTRAINT 51

YES

NO

VIOLATED?

NO

PLAN PARAMETERS
STABILIZED?

PARAMETER
CHANGE
THRESHOLD 81

YES

OUTPUT 80

41

61

PROCESSING DEVICE 12

⋮

FIG. 5

200

| 202 | GENERATING A GRAPHICAL MODEL OF A PLURALITY OF LOCATIONS, A PLURALITY OF VEHICLES, AND A PLURALITY OF VEHICLE MAINTENANCE RESOURCES |

| 204 | RECEIVING, FOR EACH VEHICLE OF THE PLURALITY OF VEHICLES, RESPECTIVE VEHICLE HEALTH SIGNAL DATA AND MAINTENANCE EVENT DATA |

| 206 | COMPUTING A LOGISTIC PLAN BASED AT LEAST IN PART ON THE GRAPHICAL MODEL, WHEREIN THE LOGISTIC PLAN INCLUDES AN ASSIGNMENT OF THE VEHICLES AND THE VEHICLE MAINTENANCE RESOURCES AMONG THE PLURALITY OF LOCATIONS |

| 208 | DETERMINING THAT THE ASSIGNMENT OF THE VEHICLE MAINTENANCE RESOURCES SATISFIES A VULNERABILITY ASSESSMENT CONSTRAINT |

| 210 | OVER A PLURALITY OF MAINTENANCE PLAN GENERATING ITERATIONS, COMPUTING A MAINTENANCE PLAN FOR THE PLURALITY OF VEHICLES THAT MINIMIZES OR MAXIMIZES A MAINTENANCE PLAN OBJECTIVE FUNCTION |

| 212 | DETERMINING WHETHER PERFORMING THE MAINTENANCE PLAN WHEN THE VEHICLE MAINTENANCE RESOURCES HAVE THE ASSIGNMENT INDICATED IN THE LOGISTIC PLAN WOULD VIOLATE THE VULNERABILITY ASSESSMENT CONSTRAINT |

| 214 | IF PERFORMING THE MAINTENANCE PLAN WOULD VIOLATE THE VULNERABILITY ASSESSMENT CONSTRAINT, MODIFYING THE LOGISTIC PLAN |

| 216 | OUTPUTTING THE LOGISTIC PLAN AND THE MAINTENANCE PLAN |

FIG. 6A

RECEIVING A RESPECTIVE PLURALITY OF WEIGHTING COEFFICIENTS ASSOCIATED WITH THE VEHICLE MAINTENANCE RESOURCES — 218

GENERATING THE LOGISTIC PLAN BASED AT LEAST IN PART ON THE WEIGHTING COEFFICIENTS — 220

# FIG. 6B

APPLYING A SIMULATED ADVERSE EVENT TO THE GRAPHICAL MODEL TO GENERATE A PERTURBED GRAPHICAL MODEL — 222

DETERMINING WHETHER THE PERTURBED GRAPHICAL MODEL VIOLATES THE VULNERABILITY ASSESSMENT CONSTRAINT WHEN THE VEHICLE MAINTENANCE RESOURCES ARE ASSIGNED AS INDICATED IN THE LOGISTIC PLAN — 224

IF THE PERTURBED GRAPHICAL MODEL VIOLATES THE VULNERABILITY ASSESSMENT CONSTRAINT

COMPUTING A MINIMAL TRANSITION SET OF ONE OR MORE MODIFICATIONS TO THE LOGISTIC PLAN THAT RESOLVE THE VIOLATION OF THE VULNERABILITY ASSESSMENT CONSTRAINT — 226

APPLYING THE MINIMAL TRANSITION SET TO THE LOGISTIC PLAN — 228

# FIG. 6C

GENERATING A PLURALITY OF CANDIDATE MAINTENANCE PLANS FOR THE PLURALITY OF VEHICLES, WHEREIN THE CANDIDATE MAINTENANCE PLANS ARE ASSOCIATED WITH AN ACTIVE MISSION PHASE OF A MISSION THAT UTILIZES THE PLURALITY OF VEHICLES — 230

FOR EACH OF THE CANDIDATE MAINTENANCE PLANS — 232

AT A TRAINED MACHINE LEARNING MODEL, FOR EACH OF THE SIMULATED ADVERSE EVENTS, DETERMINING A NUMBER OF THE VEHICLES THAT HAVE RESPECTIVE MAINTENANCE-FREE OPERATING PERIODS (MFOPS) SHORTER THAN A DURATION OF THE ACTIVE MISSION PHASE

AT THE TRAINED MACHINE LEARNING MODEL, COMPUTING PREDICTED VEHICLE HEALTH SIGNAL DATA FOR EACH OF THE CANDIDATE MAINTENANCE PLANS BASED AT LEAST IN PART ON THE VEHICLE HEALTH SIGNAL DATA AND THE MAINTENANCE EVENT DATA — 234

COMPUTING, OVER THE PLURALITY OF SIMULATED ADVERSE EVENTS, AN EXPECTED VALUE OF THE NUMBER OF VEHICLES THAT HAVE MFOPS SHORTER THAN THE DURATION — 236

SELECTING, AS THE MAINTENANCE PLAN, A CANDIDATE MAINTENANCE PLAN OF THE PLURALITY OF CANDIDATE MAINTENANCE PLANS THAT HAS A LOWEST EXPECTED VALUE OF THE NUMBER OF VEHICLES THAT HAVE MFOPS SHORTER THAN THE DURATION — 238

FIG. 6D

COMPUTING SYSTEM 300

LOGIC SUBSYSTEM 302

STORAGE SUBSYSTEM 304

DISPLAY SUBSYSTEM 306

INPUT SUBSYSTEM 308

COMMUNICATION SUBSYSTEM 310

FIG. 7

## EUROPEAN SEARCH REPORT

Europäisches
Patentamt
European
Patent Office
Office européen
des brevets

Application Number

EP 24 17 9584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2014/278712 A1 (LEE MOSHIN [US]) 18 September 2014 (2014-09-18) * paragraph [0010] - paragraph [0011] * * paragraph [0078] - paragraph [0079] * * paragraph [0095] - paragraph [0109] * * figures 1a,4,8 * | 1-15 | INV. G06Q10/0631 G06Q10/20 |
| Y | Riera Daniel ET AL: "PN to CSP Methodology: Improved Bounds" In: "Topics in Artificial Intelligence", 1 January 2002 (2002-01-01), Springer Berlin Heidelberg, XP093219766, ISSN: 0302-9743 ISBN: 978-3-540-36079-7 vol. 2504, pages 145-158, DOI: 10.1007/3-540-36079-4_13, * the whole document * | 1-15 | |
| T | Anonymous: "Constraint programming - Wikipedia", , 9 July 2023 (2023-07-09), XP093220516, Retrieved from the Internet: URL:https://en.wikipedia.org/w/index.php?title=Constraint_programming&oldid=1164436463 * the whole document * | | TECHNICAL FIELDS SEARCHED (IPC) G06Q |
| T | REED SEAN ET AL: "Logical representation of maintenance procedures for verification and analysis", 2016 11TH SYSTEM OF SYSTEMS ENGINEERING CONFERENCE (SOSE), IEEE, 12 June 2016 (2016-06-12), pages 1-6, XP032945153, DOI: 10.1109/SYSOSE.2016.7542942 [retrieved on 2016-08-12] * the whole document * | | |

-/--

The present search report has been drawn up for all claims

| Place of search | Date of completion of the search | Examiner |
|---|---|---|
| Munich | 4 November 2024 | Reino, Bernardo |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

## EUROPEAN SEARCH REPORT

Application Number

EP 24 17 9584

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | HAOXUN CHEN ET AL: "Modeling, Analysis, and Optimization of Logistics Systems Petri Net Based Approaches", SERVICE SYSTEMS AND SERVICE MANAGEMENT, 2006 INTERNATIONAL CONFERENCE ON, IEEE, PI, 1 October 2006 (2006-10-01), pages 575-582, XP031052204, ISBN: 978-1-4244-0450-6 * cf. sections 3 and 4 * | | |
| | | | **TECHNICAL FIELDS SEARCHED (IPC)** |

The present search report has been drawn up for all claims

| Place of search | Date of completion of the search | Examiner |
|---|---|---|
| Munich | 4 November 2024 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 9584

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2024

| Patent document cited in search report | Publication date | Patent family member(s) | Publication date |
|---|---|---|---|
| US 2014278712 A1 | 18-09-2014 | US 2014278712 A1<br>US 2014278713 A1<br>US 2014343999 A1 | 18-09-2014<br>18-09-2014<br>20-11-2014 |

EPO FORM P0459

For more details about this annex : see Official Journal of the European Patent Office, No. 12/82